# EUROPÄISCHE PATENTSCHRIFT

(11) **EP 0 847 346 B1**
(45) Veröffentlichungstag und Bekanntmachung des Hinweises auf die Patenterteilung: **24.10.2001**
(21) Anmeldenummer: 97922902.8
(22) Anmeldetag: 10.05.1997
(51) Int. Cl.: B60S 1/38

(54) **WISCHBLATT MIT WINDLEITFLÄCHE FÜR SCHEIBENWISCHANLAGEN VON KRAFTFAHRZEUGEN**
WIPER BLADE WITH WIND-DEFLECTING SURFACE FOR WINDSHIELD WIPER SYSTEMS OF MOTOR VEHICLES
LAME D'ESSUIE-GLACE A BRISE-VENT POUR SYSTEMES ESSUIE-GLACE DE VEHICULES A MOTEUR

(30) Priorität: 05.07.1996 DE 19627113
(43) Veröffentlichungstag der Anmeldung: 17.06.1998
(73) Patentinhaber: ROBERT BOSCH GMBH, 70442 Stuttgart (DE)
(72) Erfinder: WESTERMANN, Klaus-Jürgen, D-76307 Karlsbad (DE); VERELST, Hubert, B-3300 Tienen (BE); SCHOETERS, Ann, B-3060 Korbeek-Dijle (BE); VANROY, Jan, B-3290 Schaffen (BE)
(86) Internationale Anmeldenummer: DE9700946
(87) Internationale Veröffentlichungsnummer: WO9801325

(56) Entgegenhaltungen:
- EP-A- 0 433 169
- EP-B- 0 398 376

## Beschreibung

### Stand der Technik

Bei Anlagen zum Wischen insbesondere der Windschutzscheibe von Kraftfahrzeugen ergeben sich bei hohen Fahrgeschwindigkeiten gewisse Schwierigkeiten, weil dann der Anpreßdruck des Wischblattes an der Scheibe durch den auf das Wischblatt auftreffenden Fahrtwind mit steigender Fahrgeschwindigkeit verringert wird und dadurch die Wischqualität zumindest in bestimmten Scheibenbereichen nicht mehr den an diese gestellten Anforderungen entspricht. Ein erhöhter Anpreßdruck würde bei niedrigen Fahrgeschwindigkeiten aber zu einer unerwünscht hohen, nachteiligen Reibung zwischen der Wischleiste des Wischblattes und der Scheibe führen.

Man hat deshalb bei einer bekannten Wischanlage (EP-A-0398 376 oder EP-A-0 433 169 A1) an dem Wischblatt eine sich von dessen Traggestell nach unten zur Scheibe hin erstreckende - also hängend angeordnete - Windabweisleiste angeschraubt, die mit einer dem Fahrtwind zugewandten Windleitfläche wesentliche Bereiche des Wischblattes abdeckt. Der auf die schräggestellte Windleitfläche auftreffende Fahrtwind und/oder der sich hinter der Windabweisleiste im Bereich des Wischblattes aufbauende Unterdruck sollen, besonders bei hohen Fahrgeschwindigkeiten, für eine Erhöhung des Anpreßdrucks für das Wischblatt an der Scheibe sorgen. Eine solche, hängende Anordnung der Windabweisleiste kann jedoch in bestimmten Fällen - beispielsweise bei einer besonderen Anlenkung des Wischblatts an einem angetriebenen Wischerarm oder bei relativ engen Krümmungsradien bei sphärisch gekrümmten Scheiben - problematisch sein. Auch können sich Schwierigkeiten ergeben, wenn die Wischanlage mit einer Vorrichtung versehen ist, welche das Wischblatt in dessen Parkstellung von dem in Betrieb erforderlichen Anpreßdruck entlastet. Eine stehende Anordnung der Windabweisleiste kann sich in solchen Fällen als zweckmäßig erweisen.

Bei einer bekannten Wischvorrichtung (DE-Gebrauchsmusterschrift DE-U-78 26 802.7 ist die Windabweisleiste auf die Oberseite des das Wischblatt führenden Wischerarms aufgesetzt.

### Vorteile der Erfindung

Bei dem Wischblatt der Gattung nach der oben erwähnten EP-A-0 398 376 oder EP-A-0 433 169 mit den kennzeichnenden erfindungsgemäßen Merkmalen des Hauptanspruchs ist jedoch die Windabweisleiste - in Anpassung an die jeweiligen Gegebenheiten - entweder hängend oder stehend an dem Traggestell des Wischblattes zu befestigen. Dabei ist für beide Montagemöglichkeiten der Windabweisleiste je eine dem Fahrtwind zugewandte Windleitfläche ausgebildet, deren eine Längskante näher an der Scheibe liegt als deren andere, durch die erforderliche Schrägstellung in Anströmrichtung des Fahrtwindes gesehen, hinter der einen Längskante liegende andere Windleitflächen-Längskante.

Dadurch ergeben sich Vereinfachungen und Einsparungen bei der Fertigung des Wischblattes sowie eine vereinfachte Lagerhaltung.

Dabei ist es von besonderem Vorteil, wenn für beide Montagepositionen dieselbe Befestigungsvorrichtung verwendbar ist.

Eine einfache, auch vom Endverbraucher durchführbare Montage der Windabweisleiste am Traggestell ergibt sich, wenn weiter die Befestigungsvorrichtung Rastmittel an der Windabweisleiste aufweist, denen Gegenrastmittel des Traggestells zugeordnet sind, weil damit keine speziellen Werkzeuge zur Montage am Traggestell erforderlich sind und darüber hinaus auch der Zeitaufwand für die Montage sehr gering ist.

Wenn das Traggestell des Wischblattes einen metallischen, sich in Richtung der Wischleiste erstreckenden, im Querschnitt U-förmigen Bügel aufweist, ist in Weiterbildung der Erfindung vorgesehen, daß die Gegenrastmittel an den U-Schenkeln des Tragbügels ausgebildet sind, wobei die die beiden U-Schenkel verbindende U-Basis an zumindest einem Teilabschnitt des Tragbügels zur Bildung einer Durchbrechung entfernt ist, so daß eine stabile Rastverbindung zwischen Windabweisleiste und Traggestell erreicht wird.

Bei einer aus einem elastischen Kunststoff gefertigten Windabweisleiste hat es sich als zweckmäßig erwiesen, wenn in deren Längsrichtung mit Abstand voneinander liegend, wenigstens zwei als Rastmittel dienende, elastisch auslenkbare Rasthaken anzuordnen, denen je eine Durchbrechung in der U-Basis des Tragbügels zugeordnet ist.

In weiterer Ausgestaltung der Erfindung sind die Durchbrechungen durch die einander gegenüberliegenden inneren Wangen der U-Schenkel begrenzt und die sich so ergebenden U-basisseitigen Schenkelkanten dienen als Gegenrastmittel für zwei von den freien Enden der U-Schenkel eher zwischen die U-Schenkel des Traggestells greifende, paarweise angeordnete Federlappen mit nach außen gerichteten Rasthaken, welche die Rastmittel bilden. Die Federlappen lenken während des Montagevorgangs nach innen aus weil sie an den inneren Wangen mit ihren nach außen gerichteten Rasthaken anliegen. Bei dieser Anordnung ist die Windabweisleiste am Traggestell hängend montiert, weil sie sich im wesentlichen von dem Traggestell aus zur Scheibe erstreckt. Eine stehende Anordnung der Windabweisleiste am Traggestell ergibt sich, wenn die freien Schenkelkanten der U-Schenkel als Gegenrastmittel für zwei von der U-Basisseite her zwischen die U-Schenkel des Traggestelles greifende, paarweise angeordnete Federlappen mit nach außen gerichteten Rasthaken dienen, welche die Rastmittel bilden. Bei dieser stehenden Anordnung der Windabweisleiste erstreckt sich diese über das Traggestell hinaus nach oben.

Zweckmäßig sind die Federlappen an der einen Längskante der Windabweisleiste angeordnet und einstückig mit dieser verbunden.

Ein stabiler Aufbau der Rastmittel bei exakter Positionierung der Windabweisleiste am Traggestell ist gemäß einer Weiterbildung der Erfindung dann erreicht, wenn die Federlappen an ihrer von den Rasthaken abgewandten Enden mit einer mit der Windabweisleiste verbundenen Basisplatte verbunden sind, welche Anlageschultern für die den als Gegenrastmittel dienenden Schenkelkanten gegenüberliegenden Schenkelkanten dienen.

Wenn weiter die Federlappen unter Vorspannung an den einander zugewandten inneren Wangen der U-Schenkel anliegen, erfolgt die Verrastung zwischen Windableiste und Traggestell bei deren Montage zwangsläufig.

Eine einfache Fixierung der Windabweisleiste am Traggestell in dessen Längsrichtung ergibt sich dadurch, daß an der Basisplatte ein sich quer zu den beiden Federlappen erstreckender, elastisch auslenkbarer Klemmlappen angeordnet ist, der unter Vorspannung an einer längsseitigen Kante der Durchbrechung unter Vorspannung anliegt und die von ihm abgewandten Endflächen der Federlappen gegen die gegenüberliegende längsseitige Kante der Durchbrechung drückt.

Die bei den einander gegenüberliegenden, zur zu wischenden Scheibe gerichteten Windleitflächen, von denen - je nach Montageart der Windabweisleiste am Traggestell - die eine oder die andere dem Fahrtwind zugewandt ist, sind zur Optimierung ihrer Wirkung mit einem wenigstens annähernd gleichförmig ausgebildeten Profil versehen.

Vorteilhafte Weiterbildungen und Verbesserungen der Erfindung sind der nachfolgenden Beschreibung eines erfindungsgemäß ausgebildeten Wischblattes zu entnehmen, das in der Zeichnung dargestellt ist und ein Ausführungsbeispiel der Erfindung zeigt. Die zur Zeichnung gehörenden Figuren zeigen:
Figur 1 eine Ansicht eines Wischblatts mit einer an dessen Traggestell stehend angeordneten Windabweisleiste,
Figur 2 eine Draufsicht auf einen zu einem Traggestell des Wischblattes gehörenden, vergrößert dargestellten Hauptbügel,
Figur 3 einen Schnitt durch den Hauptbügel, gemäß Figur 1, entlang der Linie III - III in vergrößerter Darstellung,
Figur 4 eine Ansicht eines Wischblatts mit einer an dessen Traggestell hängend angeordneten Windabweisleiste,
Figur 5 einen Schnitt durch den Hauptbügel, gemäß Figur 4, entlang der Linie V - V, in vergrößerter Darstellung,
Figur 6 eine Seitenansicht der Windabweisleiste, gemäß den Figuren 1 und 4,
Figur 7 eine Draufsicht auf die Windabweisleiste, gemäß Figur 6 und Figur 8, eine in Figur 7 mit VIII bezeichnete Einzelheit der Windabweisleiste, in perspektivischer, vergrößerter Darstellung.

### Beschreibung des Ausführungsbeispiels

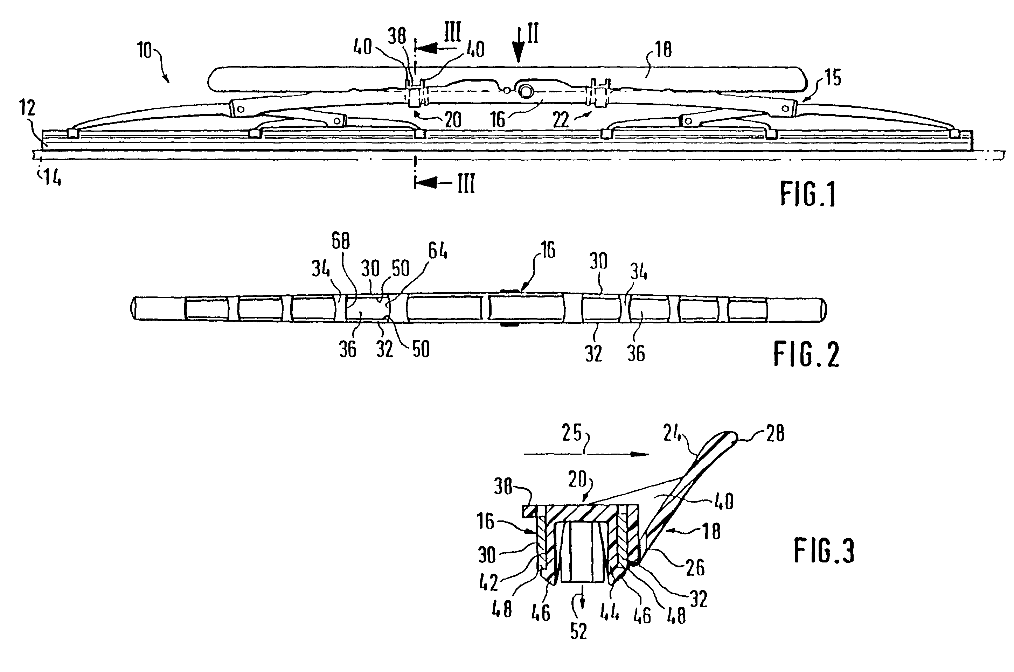

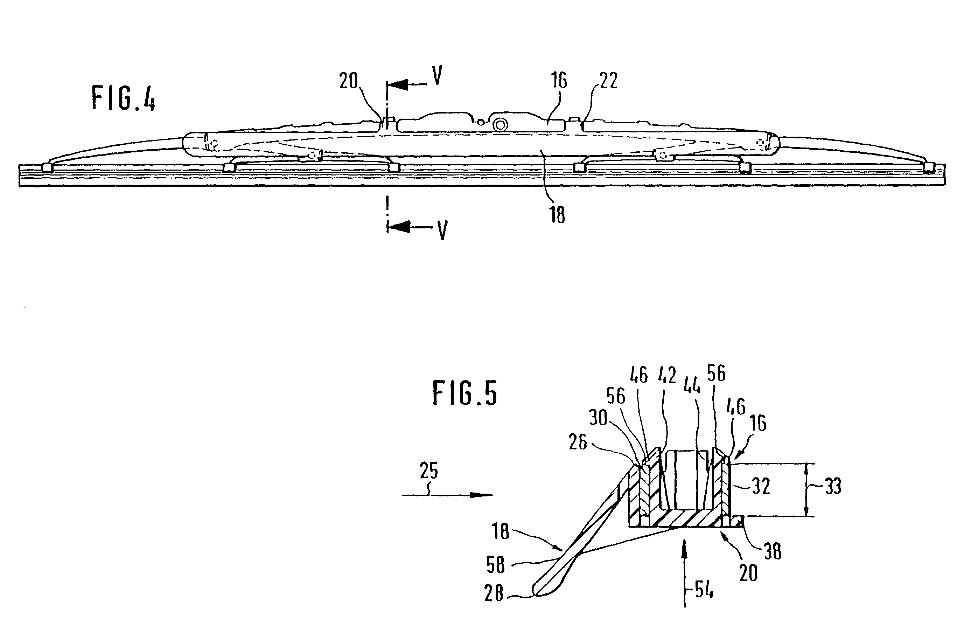

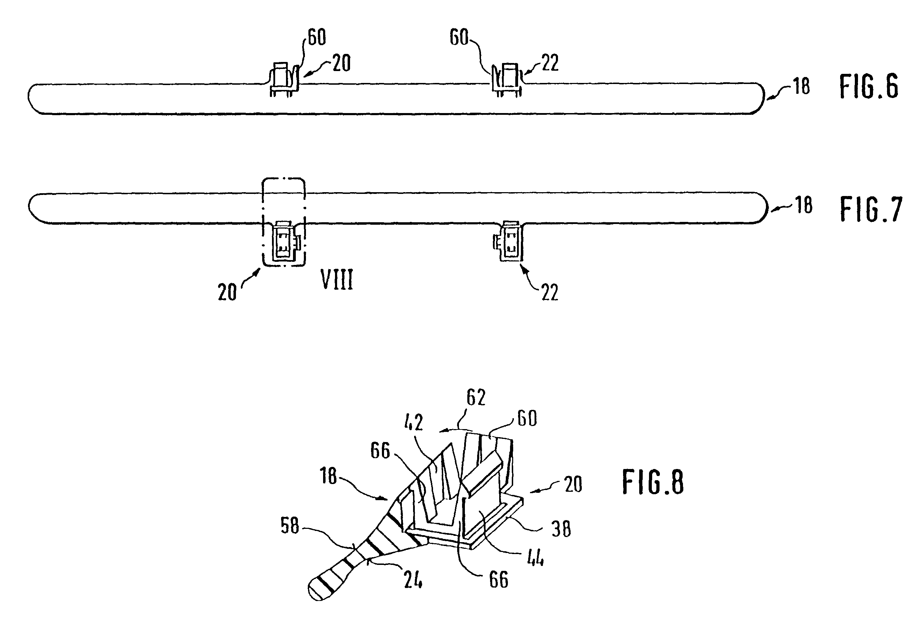

Ein in Figur 1 dargestelltes Wischblatt 10 liegt mit einer aus einem gummiähnlichen Material bestehenden Wischleiste 12 an der Oberfläche einer in Figur 1 strichpunktiert dargestellten Scheibe 14 an. Zur Reinigung der Scheibenoberfläche wird das Wischblatt 10 quer zu seiner Längserstreckung über die Oberfläche der zu wischenden Scheibe 14 verschoben. Die Wischleiste 12 ist über ein gestellartiges Tragbügelsystem 15 gehalten, an dessen Hauptbügel 16 ein nicht dargestellter, angetriebener Wischerarm befestigt ist. An dem Hauptbügel 16 ist eine Windabweisleiste 18 angeordnet, die ebenso wie das Wischblatt 10 langgestreckt ausgebildet ist. Die Befestigung der Windabweisleiste 18 an dem Hauptbügel 16 erfolgt über eine Befestigungsvorrichtung, die beim Ausführungsbeispiel zweiteilig ausgebildet und mit 20 und 22 bezeichnet ist. Die Befestigungsvorrichtung 20, 22 soll im folgenden anhand der Teil-Befestigungsvorrichtung 20 erläutert werden, die in Figur 3 im Schnitt dargestellt ist. Die Windabweisleiste 18 hat eine erste Windleitfläche 24, die dem durch den Pfeil 25 angedeuteten Fahrtwind zugewandt ist. Die Windleitfläche 24 ist so gegen den Fahrtwind geneigt, daß ihre untere Längskante 26 näher an der zu wischenden Scheibe 14 liegt, als deren in Anströmrichtung (Pfeil 25) des Fahrtwindes hinter der einen Längskante 26 liegende andere Längskante 28. Wie Figur 3 weiter veranschaulicht, erstreckt sich die Windleitfläche 24 der Windabweisleiste 18 über den Hauptbügel 16 hinaus nach oben, so daß bei dieser Anordnung von einer stehend am Hauptbügel 26 angeordneten Windabweisleiste 18 gesprochen werden kann. Dieses Kriterium ist auch aus Figur 1 klar ersichtlich. Zur Befestigung der Windabweisleiste 18 an dem aus einem Metall gefertigten, im Querschnitt U-förmigen Hauptbügel 16, weist dieser an seiner die beiden U-Schenkel 30 und 32 verbindenden U-Basis 34 Durchbrechungen 36 auf. Die Befestigungsvorrichtung 20 ist einstückig an die aus einem Kunststoff bestehende Windabweisleiste 18 angeformt. Sie hat eine Basisplatte 38, die über Streben 40 mit der eigentlichen Windabweisleiste steif verbunden ist. An der Basisplatte 38 sind zwei Federlappen 42 und 44 angeordnet, die sich von dieser aus nach unten durch die Durchbrechung 36 hindurch erstrecken und mit an ihren freien Enden angeordneten, nach außen gerichteten Rasthaken 46, die freien Endkanten 48 der U-Schenkel 30, 32, hintergreifen. Die Durchbrechungen 36 werden durch die einander gegenüberliegenden inneren Wangen 50 der U-Schenkel 30, 32 begrenzt, so daß die Federlappen 42, 44 an den inneren Wangen 50 anliegen können. Die Federlappen 42, 44 sind so angeordnet, daß sie beim Durchstecken durch die inneren Wangen 50 der U-Schenkel 30, 32 aufeinander zu ausgelenkt werden, wobei sie mit ihren Rasthaken 46 an den inneren Wangen 50 anliegen. Nach dem Durchstecken der Federlappen 42, 44 in Richtung des Pfeiles 52 in Figur 3, federn die Federlappen 42, 44 in ihrer in Figur 3 dargestellten Betriebsposition, und verrasten mit den Endkanten 48 der U-Schenkel 30, 32. Die Federlappen bilden also zusammen mit ihren Rasthaken Rastmittel, die mit den als Gegenrastmitteln wirkenden Endkanten 48 der U-Schenkel 32, 34 im Sinne einer Rastverbindung zusammenarbeiten. Die Basisplatte 38 erfüllt auch die Aufgabe von Anschlagschultern, an denen die einen Endkanten der U-Schenkel 30, 32 anliegen, während deren anderen Endkanten von den Rasthaken 46 der Federlappen 42, 44 hintergriffen werden. Es sind also die Abstände von der Basisplatte 38 zu den Rasthaken 46 auf die Höhenmaße 33 der U-Schenkel 30, 32 abzustimmen (Figur 5). Eine weitere Besonderheit der Befestigungsvorrichtung 20 wird später anhand von Figur 8 erläutert werden.

Die Figuren 4 und 5 zeigen das Wischblatt 10, dessen grundsätzlicher Aufbau dem schon anhand der Figur 1 geschilderten Aufbau entspricht. Abweichend davon ist jedoch die Windabweisleiste 18 am Hauptbügel 16 hängend angeordnet. Unter einer hängenden Anordnung soll verstanden werden, daß sich die Windabweisleiste 18 vom Hauptbügel 16 aus nach unten zur Scheibe 14 erstreckt. Zur Montage der Windabweisleiste 18 am Hauptbügel 16 wird diese nun von unten her in Richtung des Pfeiles 54 mit den Federlappen 42, 44 zwischen die Schenkel 32, 34 des Hauptbügels 16 eingeführt, bis die Befestigungsvorrichtung 20 mit ihrer Basisplatte 38 an den freien Enden der U-Schenkel 32, 34 zur Anlage kommt. In dieser Position federn die während der Montage aufeinander zu ausgelenkten Federlappen 42, 44 in ihre in Figur 5 dargestellte Montageposition, wobei sie mit ihren Rasthaken 46 die U-basisseitigen Schenkelkanten hintergreifen. Diese Schenkelkanten ergeben sich dadurch, daß die U-Basis 34 des Hauptbügels 16 mit den Durchbrechungen 36 versehen ist, die bis an die einander gegenüberliegenden inneren Wangen 50 (Figur 2) des Hauptbügels herangeführt sind. Die U-basisseitigen Schenkelkanten 56 bilden somit Gegenrastmittel, welche mit den als Rastmittel wirkenden, mit den Rasthaken 46 versehenen Federlappen 42, 44 dienen.

Die hängende Anordnung gemäß Figur 5 der Windabweisleiste 18 am Hauptbügel 16 des Traggestells 14 unterscheidet sich von der stehenden Anordnung gemäß Figur 3 also lediglich dadurch, daß dieselbe Windabweisleiste einmal in Richtung des Pfeiles 52 (Figur 3) oder auch in Richtung des Pfeiles 54 (Figur 5) am Hauptbügel 16 verrastet werden kann, ohne daß dazu besondere Maßnahmen am Traggestell oder an der Windabweisleiste ergriffen werden müssen. Bei der in Figur 5 gezeigten hängenden Anordnung der Windabweisleiste 18 ist nun eine andere Windleitfläche 58 dem Fahrtwind (Pfeil 25) zugewandt. Die beiden Windleitflächen 24 und 58 der Windabweisleiste 18 befinden sich auf den voneinander abgewandten Oberflächen der Windabweisleiste 18 und weisen je ein wenigstens annähernd gleichförmig ausgebildetes Profil auf.

Figur 8 zeigt besonders deutlich eine weitere Ausgestaltung der Erfindung, gemäß der an der Basisplatte 38 der Befestigungsvorrichtung 20, ein sich quer zu den beiden paarweise angeordneten Federlappen 42, 44 erstreckender Klemmlappen 60 angeordnet ist. Der Klemmlappen 60 stützt sich beim Einführen der Befestigungsvorrichtung 20 in die ihr zugeordnete Durchbrechung 36 des Hauptbügels 16, unter elastischer Auslenkung in Richtung des Pfeiles 62, an der einen längsseitigen Kante 64 oder 68 der Durchbrechung 36 ab. Da die beiden in Längsrichtung der Windabweisleiste 18 mit Abstand voneinander angeordneten Teil-Befestigungsvorrichtungen 20, 22 auf die gleiche Weise in den ihnen zugeordneten Durchbrechungen 36 des Hauptbügels 16 verankert sind und die Klemmlappen 60 gegensinnig wirken (Figur 6), ergibt sich eine betriebssichere, feste Verbindung und ein absolut spielfreier Sitz der Befestigungsvorrichtungen 20 und 22, in den ihr zugeordneten Durchbrechungen 36 der Windabweisleiste 18 am Hauptbügel 16 am Tragbügelgestell 15. Die Anordnung und Ausgestaltung der Klemmlappen 60 ist aus Gründen der besseren Übersichtlichkeit lediglich anhand der Figur 8 erläutert worden.

Anhand des beschriebenen Ausführungsbeispiels ergibt sich somit klar, daß bei einem Wischblatt gemäß dem Oberbegriff des Anspruchs 1 die Windabweisleiste 18 an dem Traggestell 15 hängend oder auf dem Traggestell 14 stehend montierbar ist und daß die Windabweisleiste in jeder der beiden Montagepositionen eine dem Fahrtwind (Pfeil 25) zugewandte Windleitfläche 24 bzw. 58 aufweist.

## Patentansprüche

1. Wischblatt (10) für Scheibenwischanlagen von Kraftfahrzeugen mit einem Traggestell (15) für eine an der Scheibe angelegte, quer zu ihrer Längserstreckung über die Scheibe (14) verschiebbare Wischleiste (12) und eine an dem Traggestell angeordnete, sich etwa parallel zur Wischleiste erstreckende Windabweisleiste (18), welche eine dem Fahrtwind zugewandte Windleitfläche hat, deren eine Längskante näher an der Scheibe liegt als deren in Anströmrichtung des Fahrtwindes hinter der einen Längskante befindliche andere Längskante, **dadurch gekennzeichnet, daß** das Traggestell (15) Durchbrechungen (36) aufweist und daß die Windabweisleiste (18) an dem Traggestell (15) mittels die Durchbrechungen (36) durchgreifende Rastmittel (42 bis 46) hängend oder auf dem Traggestell (15) stehend montierbar ist und in jeder der beiden Montagepositionen eine dem Fahrtwind (Pfeil 25) zugewandte Windleitfläche (24 bzw. 58) aufweist.

2. Wischblatt nach Anspruch 1, **dadurch gekennzeichnet, daß** für beide Montagepositionen dieselbe Befestigungsvorrichtung (20, 22) verwendbar ist.

3. Wischblatt nach Anspruch 2, **dadurch gekennzeichnet, daß** die Befestigungsvorrichtung (20) Rastmittel (42 bis 46) an der Windabweisleiste (18) aufweist, denen Gegenrastmittel (48 bzw. 56) des Traggestells (15) zugeordnet sind.

4. Wischblatt nach Anspruch 3, dessen Traggestell (15) einen sich in Richtung der Wischleiste erstreckenden, im Querschnitt U-förmigen Bügel (16) aufweist, **dadurch gekennzeichnet, daß** die Gegenrastmittel an den U-Schenkeln (30, 32) des Tragbügels (16) ausgebildet sind, wobei die die beiden U-Schenkel verbindende U-Basis (34) an zumindest einem Teilabschnitt des Tragbügels zur Bildung einer Durchbrechung (36) entfernt ist.

5. Wischblatt nach Anspruch 4, **dadurch gekennzeichnet, daß** an der Windabweisleiste (18) in deren Längsrichtung mit Abstand voneinander liegend wenigstens zwei als Rastmittel dienende, elastisch auslenkbare Rasthaken (46) angeordnet sind, denen je eine Durchbrechung (36) in der U-Basis (34) des Tragbügels (16) zugeordnet ist.

6. Wischblatt nach Anspruch 5, **dadurch gekennzeichnet, daß** die Durchbrechungen (36) durch die einander gegenüberliegenden inneren Wangen (50) der U-Schenkel (30, 32) begrenzt sind und daß die sich so ergebenden, U-basisseitigen Schenkelkanten als Gegenrastmittel für zwei von den freien Enden der U-Schenkel eher zwischen die U-Schenkel des Traggestells greifende, paarweise angeordnete Federlappen (42, 44) mit nach außen gerichteten Rasthaken (46) dienen, welche die Rastmittel bilden.

7. Wischblatt nach Anspruch 5, **dadurch gekennzeichnet, daß** die freien Schenkelkanten der U-Schenkel (30, 32) als Gegenrastmittel für zwei von der U-Basisseite her zwischen die U-Schenkel des Tragbügels (16) greifende, paarweise angeordnete Federlappen (42, 44) mit nach außen gerichteten Rasthaken (46) dienen, welche die Rastmittel bilden.

8. Wischblatt nach einem der Ansprüche 6 oder 7, **dadurch gekennzeichnet, daß** die Federlappen (42, 44) an der einen Längskante (26) angeordnet und einstückig mit dieser verbunden sind.

9. Wischblatt nach Anspruch 8, **dadurch gekennzeichnet, daß** die Federlappen (42, 44) an ihrer von den Rasthaken (46) abgewandten Enden mit einer mit der Windabweisleiste (18) verbundenen Basisplatte (38) verbunden sind, welche Anschlagschultern für die den als Gegenrastmitteln dienenden Schenkelkanten gegenüberliegenden Schenkelkanten dienen.

10. Wischblatt nach Anspruch 9, **dadurch gekennzeichnet, daß** die Federlappen (42, 44) unter Vorspannung an den einander zugewandten inneren Wangen (50) der U-Schenkel anliegen.

11. Wischblatt nach einem der Ansprüche 8 oder 9, **dadurch gekennzeichnet, daß** mindestens zwei Befestigungsvorrichtungen vorgesehen sind und an jeder Basisplatte (38) ein sich quer zu den beiden Federlappen (42, 44) erstreckender, elastisch auslenkbarer Klemmlappen (60) angeordnet ist und daß die Klemmlappen unter gegensinnig wirkender Vorspannung an einer längsseitigen Kante (64, 68) der Durchbrechung (36) anliegen.

12. Wischblatt nach einem der Ansprüche 1 bis 11, **dadurch gekennzeichnet, daß** die beiden einander gegenüberliegenden, zur zu wischenden Scheibe (14) gerichteten Windleitflächen (24 bzw. 58) ein wenigstens annähernd gleichförmig ausgebildetes Profil aufweisen.

## Claims

1. Wiper blade (10) for wiper systems of motor vehicles, having a supporting frame (15) for a wiper strip (12) which is placed against the window and can be displaced transversely to its longitudinal extent over the window (14) and for a wind-deflecting strip (18) which is arranged on the supporting frame, extends approximately parallel to the wiper strip and has a wind-directing surface which faces the head wind and one longitudinal edge of which lies closer to the window than its other longitudinal edge, which is located behind the one longitudinal edge in the air-flow direction of the head wind, **characterized in that** the supporting frame (15) has apertures (36), and **in that** the wind-deflecting strip (18) can be fitted on the supporting frame (15), in a manner such that it is suspended or stands on the supporting frame (15), by means of latching means (42 to 46) which reach through the apertures (36), and in each of the two installation positions has a wind-directing surface (24 or 58) which faces the head wind (arrow 25).

2. Wiper blade according to Claim 1, **characterized in that** the same fastening device (20, 22) can be used for both installation positions.

3. Wiper blade according to Claim 2, **characterized in that** the fastening device (20) has latching means (42 to 46) on the wind-deflecting strip (18) which are assigned mating latching means (48 or 56) of the supporting frame (15).

4. Wiper blade according to Claim 3, the supporting frame (15) of which has a bracket (16) which extends in the direction of the wiper strip and is U-shaped in cross section, **characterized in that** the mating latching means are formed on the U-limbs (30, 32) of the supporting bracket (16), the U-base (34), which connects the two U-limbs, being removed on at least one subsection of the supporting bracket so as to form an aperture (36).

5. Wiper blade according to Claim 4, **characterized in that** at least two elastically deflectable latching hooks (46) which serve as the latching means are arranged spaced apart from one another on the wind-deflecting strip (18) in the longitudinal direction thereof, the said latching hooks each being assigned an aperture (56) in the U-base (34) of the supporting bracket (16).

6. Wiper blade according to Claim 5, **characterized in that** the apertures (36) are bounded by the mutually opposite inner cheeks (50) of the U-limbs (30, 32), and **in that** the resultant, U-base-side limb edges serve as mating latching means for two spring tabs (42, 44) which reach more easily between the U-limbs of the supporting frame from the free ends of the U-limbs, are arranged in pairs and have outwardly directed latching hooks (46) which form the latching means.

7. Wiper blade according to Claim 5, **characterized in that** the free limb edges of the U-limbs (30, 32) serve as mating latching means for two spring tabs (42, 44) which grip between the U-limbs of the supporting bracket (16) from the U-base side, are arranged in pairs and have outwardly directed latching hooks (46) which form the latching means.

8. Wiper blade according to one of Claims 6 or 7,
**characterized in that** the spring tabs (42, 44) are arranged on the one longitudinal edge (26) and are connected integrally thereto.

9. Wiper blade according to Claim 8, **characterized in that** at their ends facing away from the latching hooks (46) the spring tabs (42, 44) are connected to a baseplate (38) which is connected to the wind-deflecting strip (18), the said connections serving as stop shoulders for the limb edges lying opposite the limb edges serving as the mating latching means.

10. Wiper blade according to Claim 9, **characterized in that** the spring tabs (42, 44) bear under prestress against the mutually facing, inner cheeks (50) of the U-limbs.

11. Wiper blade according to one of Claims 8 or 9, **characterized in that** at least two fastening devices are provided and an elastically deflectable clamping tab (60) which extends transversely to the two spring tabs (42, 44) is arranged on each baseplate (38), and **in that** the clamping tabs bear, under oppositely acting prestress, against a side edge (64, 68) of the aperture (36).

12. Wiper blade according to one of Claims 1 to 11, **characterized in that** the two mutually opposite wind-deflecting surfaces (24 and 58) which face towards the window (14) to be wiped have a profile which is at least approximately of uniform design.

## Revendications

1. Balai (10) d'essuie-glace pour une installation d'essuie-glace de véhicule comprenant un palonnier (15) pour une lame d'essuyage (12) appliquée contre la vitre et mobile sur la vitre (14) transversalement à son extension longitudinale, et une barrette déflectrice (18), portée par le palonnier, sensiblement parallèle à la lame d'essuyage, et ayant une surface de guidage d'air tournée vers le vent de circulation résultant du mouvement, et dont une arête longitudinale est plus proche de la vitre que l'autre située en aval dans le sens d'attaque du vent de circulation,
**caractérisé en ce que**
le palonnier (15) comporte des découpes (36) et la barrette déflectrice (18) est montée de manière suspendue au palonnier (15) à l'aide de moyens d'accrochage (42-46) traversant les découpes (36) ou montée debout sur le palonnier (15), et dans chacune des deux positions de montage, la barrette présente une surface de guidage d'air (24, 58), tournée vers le vent de circulation (flèche 25).

2. Balai d'essuie-glace selon la revendication 1,
**caractérisé par**
le même dispositif de fixation (20, 22) pour les deux positions de montage.

3. Balai d'essuie-glace selon la revendication 2,
**caractérisé en ce que**
le dispositif de fixation (20) comprend des moyens d'accrochage (42-46) sur la barrette déflectrice (18) auxquels sont associés des moyens d'accrochage complémentaires (48-56) du palonnier (15).

4. Balai d'essuie-glace selon la revendication 3, dont le palonnier (1) comprend un étrier (16) à section en forme de U s'étendant dans la direction de la lame d'essuyage,
**caractérisé en ce que**
les moyens d'accrochage complémentaires sont réalisés sur les branches en U (30, 32) de l'étrier (16),
la base (34) du U reliant les deux branches de cette forme en U, étant enlevée sur au moins un segment partiel de l'étrier de support pour former une découpe (36).

5. Balai d'essuie-glace selon la revendication 4,
**caractérisé en ce que**
dans sa direction longitudinale, la barrette déflectrice (18) comporte au moins deux crochets (46) déformables élastiquement, servant de moyens d'accrochage, écartés l'un de l'autre, et une découpe (36) de la base (34) de la forme en U de l'étrier (16) est chaque fois associée à ces crochets.

6. Balai d'essuie-glace selon la revendication 5,
**caractérisé en ce que**
- les découpes (36) sont limitées par les joues intérieures (50), opposées des branches (30, 32) de la forme en U et
- les arrêtes des branches ainsi formées du côté de la base de la forme en U servent de moyens d'accrochage complémentaires pour une paire de pattes élastiques (42, 44), en partant des extrémités libres les branches de la forme en U, et venant prendre entre ces branches de la forme en U du palonnier, avec des crochets 46 dirigés vers l'extérieur et constituant les moyens d'accrochage.

7. Balai d'essuie-glace selon la revendication 5,
**caractérisé en ce que**
les arrêtes libres des branches (30, 32) de la forme en U servent de moyens d'accrochage complémentaires pour deux pattes élastiques (42, 44) prévues par paire, venant prendre à partir du côté de la base de la forme en U entre les banches de la forme en U de l'étrier (16), ces pattes élastiques ayant des crochets (46) tournés vers l'extérieur et constituant les moyens d'accrochage.

8. Balai d'essuie-glace selon l'une quelconque des revendications 6 ou 7,
**caractérisé en ce que**
les pattes élastiques (42, 44) sont prévues sur une arrête longitudinale (26) et font corps avec celle-ci.

9. Balai d'essuie-glace selon la revendication 8,
**caractérisé en ce que**
par leurs extrémités opposées aux crochets d'accrochage (46) les pattes élastiques (42, 44) sont reliées à une plaque de base (38) reliée à la barrette déflectrice (18), et qui sert d'épaulements de butée pour les arêtes opposées aux arêtes des branches constituant les moyens d'accrochages complémentaires.

10. Balai d'essuie-glace selon la revendication 9,
**caractérisé en ce que**
les pattes élastiques (42, 44) sont appliquées avec précontrainte contre les joues intérieures (50) des branches en U, tournées l'une vers l'autre.

11. Balai d'essuie-glace selon l'une quelconque des revendications 8 ou 9,
**caractérisé en ce qu'**
au moins deux dispositifs de fixation sont prévus, et chaque plaque de base (38) est munie d'une patte de serrage (60), susceptible d'être écartée élastiquement et s'étendant transversalement aux deux pattes élastiques (42, 44), et
les pattes de serrage s'appliquent avec une précontrainte agissant dans le sens opposé contre l'une des arêtes longitudinales (64, 68) de la découpe (36).

12. Balai d'essuie-glace selon l'une quelconque des revendications 1 à 11,
**caractérisé en ce que**
les deux surfaces déflectrices (24, 58) opposées, dirigées vers la vitre (14) ont un profil au moins sensiblement analogue.
